# EUROPÄISCHE PATENTANMELDUNG

(11) **EP 1 593 897 A1**
(43) Veröffentlichungstag der Anmeldung: **09.11.2005**
(21) Anmeldenummer: 05103111.0
(22) Anmeldetag: 19.04.2005
(51) Int. Cl.: F16L 11/115

(54) **Wellrohr**

(30) Priorität: 08.05.2004 DE 102004022850
(71) Anmelder: ContiTech Schlauch GmbH, 30165 Hannover (DE)
(72) Erfinder: Brühne, Klaus, 34497 Korbach (DE); Hofmann, Michael, 60431 Frankfurt am Main (DE)

(57) **Zusammenfassung**

Ein Wellrohr (1), das mit einem sich zumindest über einen Teil seiner Länge erstreckenden, metallischen und rohrförmigen Mantel (2) versehen ist, der im Innern des Wellrohres (1) angeordnet ist. Erfindungsgemäß ist der rohrförmige Mantel (2) derart ausgebildet, dass er sich nach seinem Einbringen in das bereits als solches hergestellte Wellrohr (1) ebendort zur Fixierung radial aufspannt und an den Innenradien des Wellrohres (1) ohne weitere Befestigung anliegt.

## Beschreibung

Die Erfindung betrifft ein Wellrohr, das mit einem sich zumindest über einen Teil seiner Länge erstreckenden metallischen und rohrförmigen Mantel versehen ist, der im Innern des Wellrohres angeordnet ist.

Unter einem Wellrohr bzw. Wellschlauch wird ein druckdichter Metallschlauch mit wellenförmiger Profilierung der Wand verstanden. Die Biegeelastizität der Wellenflanken verleiht dem Wellschlauch große elastische Biegbarkeit. Bei einem Wellschlauch werden zwei Grundtypen, nämlich der Ringwellschlauch und der Wendelwellschlauch, unterschieden. Während der Ringwellschlauch ringförmig geschlossene, parallele Wellen umfasst, weist der Wendelwellschlauch wendelförmig umlaufende Wellen auf.

Aus der US 2 934 095 ist ein Wellrohr bekannt, bei dem sich der metallische Mantel über die gesamte Länge des Wellrohrs in dessen Innern erstreckt. Der Mantel besteht aus einem zylindrischen Rohrteil, das aus einem Fasergeflecht, z.B. aus Metalldraht, gebildet ist und endseitig an ungewellten Rohrstutzen fest angebracht ist, an denen auch der gewellte Abschnitt befestigt ist, wobei die ungewellten Rohrstutzen daran befestigte Befestigungsflansche tragen. Der innere metallische Mantel liegt mit Berührungskontakt von innen her an den einzelnen Wellen des gewellten Abschnitts an. Durch diesen inneren Mantel soll ein durch die nach innen offenen Wellen bedingter Druckabfall beim hindurchströmenden Medium reduziert werden. Ferner sollen etwaige Turbulenzen des hindurchströmenden Mediums und Schwingungen des Wellrohrs reduziert werden.

Von Nachteil ist, dass der innere Mantel in relativ aufwendiger Weise befestigt werden muss.

Aus der DE 34 24 704 ist zur Vermeidung dieses Nachteils ein Wellrohr bekannt, bei dem der Mantel der innenseitigen Kontur der Wellen des Wellrohrs folgend in die Innenwellen des Wellrohres eingeformt ist. Durch das Einformen wird es unnötig, den Mantel zusätzlich noch mit dem Wellrohr in sonstiger Weise, z.B. durch Schweißen, Löten, Festspannen mittels Flanschen oder dergleichen, fest zu verbinden. Der Mantel ist vorzugsweise aus einem Geflecht gebildet, das im Innern des Wellrohrs, der innenseitigen Kontur der Wellen des Wellrohrs folgend bereits bei der Herstellung des Wellrohrs mit eingeformt wird.

Nachteilig daran ist, dass bereits bei der Herstellung des Wellrohrs zu entscheiden ist, welche Art von Mantel in das Wellrohr eingeformt werden soll. Darüber hinaus findet durch das Einformen des Mantels auch nachteilig eine Umformung des Mantels statt, wobei Ungleichmäßigkeiten und Beschädigungen im Mantel entstehen können, die sich auch negativ auf die mittels eines solchen Mantels zu lösende Aufgabe, nämlich den durch die nach innen offenen Wellen bedingten Druckabfall beim hindurchströmenden Medium oder etwaige Turbulenzen des hindurchströmenden Mediums zu reduzieren, auswirken.

Der Erfindung liegt daher die Aufgabe zugrunde, ein Wellrohr der eingangs genannten Art derart weiter zu entwickeln, dass der innere Mantel weder durch Befestigungsmittel aufwendig im oder am Wellrohr zu befestigen noch aufwendig bei der Herstellung des Wellrohrs in das Wellrohr einzuformen ist.

Diese Aufgabe wird bei einem Wellrohr, das mit einem sich zumindest über einen Teil seiner Länge erstreckenden metallischen und rohrförmigen Mantel versehen ist, der im Innern des Wellrohres angeordnet ist, dadurch gelöst, dass der rohrförmige Mantel derart ausgebildet ist, dass er sich nach seinem Einbringen in das bereits als solches hergestellte Wellrohr ebendort zur Fixierung radial aufspannt und an den Innenradien des Wellrohrs ohne weitere Befestigung anliegt.

Gegenüber der aus dem Stand der Technik bekannten Einformung des Mantels in das Wellrohr und der damit verbundenen Umformung des Mantels besteht beim erfindungsgemäßen Wellrohr der Vorteil, dass der Mantel sich aufspannt und daher keine durch eine Umformung bedingten Ungleichmäßigkeiten oder Beschädigungen erfährt. Durch das Auf spannen des Mantels wird dieser im Wellrohr, insbesondere auch durch ein Aufspannen in die Wellentäler des Wellrohrs hinein, ausreichend fixiert. Gleichzeitig reduziert der aufgespannte Mantel den durch die nach innen offenen Wellen bedingten Druckabfall beim hindurchströmenden Medium. Bei einer Einformung des Mantels nach dem Stand der Technik würde dieser dagegen der innenseitigen Konturen der Wellen des Wellrohrs vollständig folgend in die Innenwellen des Wellrohrs eingeformt sein, wodurch der durch die nach innen offenen Wellen verursachte Druckabfall nicht wesentlich reduziert wird..

Vorteilhaft ist auch, dass die Herstellung des erfindungsgemäßen Wellrohrs unabhängig von der Herstellung des Wellrohrs als solches, also eines Wellrohrs ohne inneren Mantel, ist. Dadurch sind auch kurzfristig gewünschte Ausgestaltungen des erfindungsgemäßen Wellrohrs möglich.

Durch das Aufspannen des Mantels im Innern des Wellrohrs wird außerdem erreicht, dass auf jegliche Befestigungsmittel zur Fixierung des Mantels am oder im Wellrohr verzichtet werden kann. Eine derartige Befestigung wäre üblicherweise sehr aufwendig.

Eine Weiterbildung sieht vor, dass der aufgespannte Mantel mit einem vorgegebenen Anpressdruck gegen die Innenradien des Wellrohres drückt. Dadurch wird erreicht, dass der Mantel den gegebenen Anforderungen entsprechend fest im Wellrohr fixiert ist, ohne das Befestigungsmittel erforderlich sind, wobei der Anpressdruck durch das Aufspannen des Mantels selbst erzeugt wird und in Abhängigkeit vom durchströmenden Medium durch die Auswahl eines geeigneten Mantels auswählbar ist.

Eine vorteilhafte Ausgestaltung der Erfindung sieht vor, dass der aufgespannte Mantel ein Geflecht ist, das derart ausgebildet ist, dass dessen einzelne Drähte sich zum Aufspannen des Mantels aufstellen.

Durch das Einbringen eines solchen Geflechts in das Wellrohr werden Wirbelablösungen und somit partielle Schallquellen beim Hindurchströmen des Mediums durch das Wellrohr verhindert. Dies führt zu einer merklichen Geräuschreduktion. Es hat sich herausgestellt, dass das erfindungsgemäß im Wellrohr aufgespannte Geflecht insbesondere die Bildung von so genannten Karmanschen Wirbeln oder stehenden Wellen verhindert und gleichzeitig zu einer Reduktion des Druckabfalls beim durchströmenden Medium im Wellrohr führt.

Unter einem Geflecht wird hierbei ein Gebilde aus recht- und linksgängigen Drähten oder Drahtbündeln verstanden, die abwechselnd über- und untergreifend verkreuzt sind.

Nachfolgend wird die Erfindung anhand zweier Ausführungsbeispiele erläutert, die in der Zeichnung dargestellt sind. In dieser zeigen:
- Fig. 1: eine schematische Darstellung eines erfindungsgemäßen Wellrohrs a) vor seiner Herstellung und b) nach seiner Herstellung, und
- Fig. 2: eine schematische Darstellung eines weiteren erfindungsgemäßen Wellrohrs a) vor seiner Herstellung und b) nach seiner Herstellung.

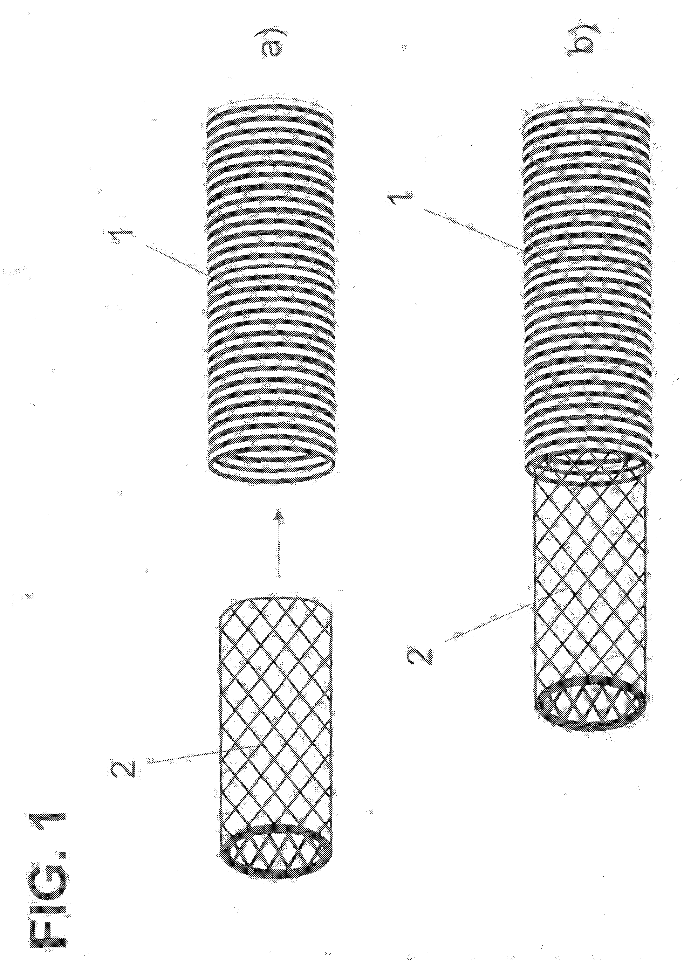

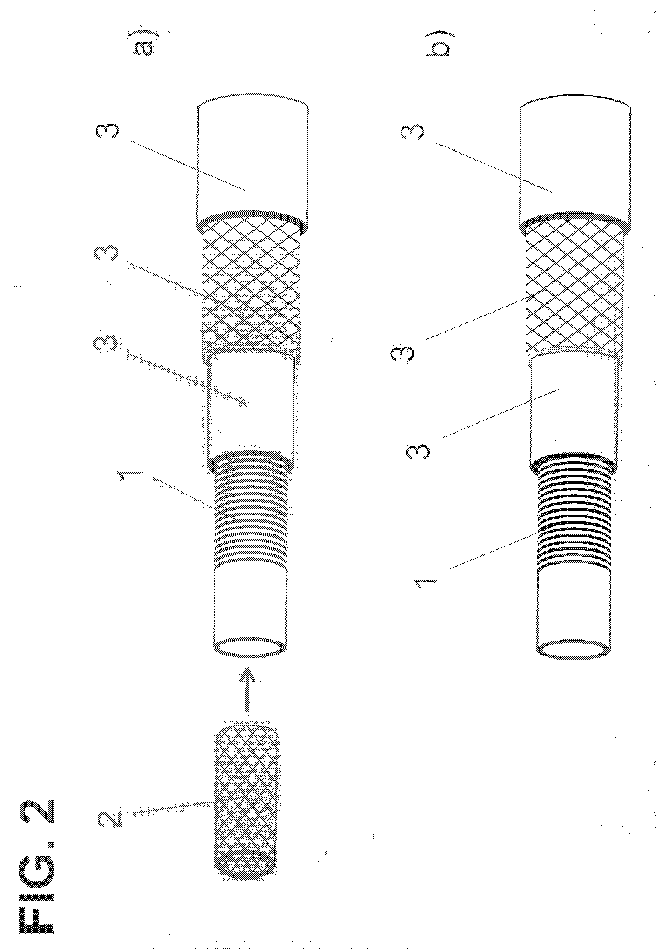

Das in den Fig. 1 und 2 dargestellte erfindungsgemäße Wellrohr 1 ist mit einem sich zumindest über einen Teil seiner Länge erstreckenden, metallischen und rohrförmigen Geflecht 2 versehen, das sich nach seinem Einbringen in das bereits als solches hergestellte Wellrohr 1 ebendort zur Fixierung radial aufspannt und mit einem vorgegebenen Anpressdruck gegen die Innenradien des Wellrohres 1 drückt. Weitere Mittel zur Befestigung des Geflechts 2 im oder am Wellrohr 1 sind nicht vorgesehen. Das Geflecht 2 ist hierbei derart ausgebildet, dass dessen einzelne Drähte sich nach dem Einbringen in das Wellrohr 1 zum Aufspannen aufstellen.

Während in a) das erfindungsgemäße Wellrohr noch vor seiner Herstellung, also noch vor dem Einbringen des Geflechts 2 in das bereits als solches hergestellte Wellrohr 1, dargestellt ist, wird in b) das fertige erfindungsgemäße Wellrohr 1 abgebildet.

Zusätzlich kann das erfindungsgemäße Wellrohr 1 - wie in Fig. 2 dargestellt - noch weitere dem Fachmann aus dem Stand der Technik bekannte äußere Schichten 3 umfassen. Das in Fig. 2 dargestellte erfindungsgemäße Wellrohr eignet 1 sich insbesondere als Kohlendioxidleitung für Klimaanlagen.

### Bezugszeichenliste

(ist Bestandteil der Beschreibung)
- 1: Wellrohr
- 2: Mantel
- 3: äußere Schichten

## Patentansprüche

1. Wellrohr (1), das mit einem sich zumindest über einen Teil seiner Länge erstreckenden, metallischen und rohrförmigen Mantel (2) versehen ist, der im Innern des Wellrohres (1) angeordnet ist, **dadurch gekennzeichnet, dass** der rohrförmige Mantel (2) derart ausgebildet ist, dass er sich nach seinem Einbringen in das bereits als solches hergestellte Wellrohr (1) ebendort zur Fixierung radial aufspannt und an den Innenradien des Wellrohres (1) ohne weitere Befestigung anliegt.

2. Wellrohr (1) nach Anspruch 1, **dadurch gekennzeichnet, dass** der aufgespannte Mantel (2) mit einem vorgegebenen Anpressdruck gegen die Innenradien des Wellrohres (1) drückt.

3. Wellrohr (1) nach Anspruch 1 oder 2, **dadurch gekennzeichnet, dass** der aufgespannte Mantel (2) ein Geflecht ist, das derart ausgebildet ist, dass sich dessen einzelne Drähte zum Aufspannen des Mantels (2) aufstellen.
